# EUROPEAN PATENT SPECIFICATION

(11) **EP 0 742 886 B1**
(45) Date of publication and mention of the grant of the patent: **20.10.2004**
(21) Application number: 95909152.1
(22) Date of filing: 20.02.1995
(51) Int. Cl.: F25D 11/02, B65D 88/74, B65D 19/38

(54) **PALLET BASED REFRIGERATED TRANSPORTATION SYSTEM**
PALETTENBASIERTES GEKÜHLTES TRANSPORTSYSTEM
SYSTEME DE TRANSPORT REFRIGERE DE PALETTES

(30) Priority: 18.02.1994 NZ 25091494; 21.02.1994 NZ 25092994
(43) Date of publication of application: 20.11.1996
(73) Proprietor: TRANSPHERE SYSTEMS LIMITED, Ellerslie, Auckland (NZ)
(72) Inventor: BOSHER, Paul, Raymond, Ellerslie, Auckland (NZ); GRAINGER, Philip, Barry, Epsom, Auckland (NZ)
(74) Representative: Dearing-Lambert, Peter Richard
(86) International application number: PCT/NZ1995/000018
(87) International publication number: WO 1995/022728

(56) References cited:
- EP-A- 0 296 343
- WO-A-94/15841
- AU-A- 6 450 494
- DE-A- 4 218 026
- FR-A- 2 285 179
- FR-A- 2 694 744
- GB-A- 1 345 696
- GB-A- 2 163 538
- SE-B- 384 005
- US-A- 2 556 418
- US-A- 4 132 088

## Description

### TECHNICAL FIELD

The present invention relates to a forklift carryable pallet according to the preamble of claim 1. Such a pallet is known from document FR-A-2 694 744.

### BACKGROUND ART

Many containerised systems have been proposed whereby refrigerated meats or respiring comestibles can be transported while under refrigeration and a controlled atmosphere. The size and expense of such containers has meant that their size has been such that a great deal of produce needs to be assembled and even once packed in the containers there is a need to await specialised shipping.

There are applications for refrigerated cargoes based on a pallet system that do not require specialised shipping (as with containers) and, since a pallet system normally handles volumes less than that of a true shipping container, there is a very much reduced need to aggregate produce in sufficient quantities to enable the filling of the transporting apparatus.

This realisation in relation to meats which, when in cantainers destined for the northem hemisphere, normally required atmospheric control (normally high carbon dioxide concentrations) in addition to refrigeration has meant that in many instances chilled meats can be packed on a pallet and reach the market place in the northern hemisphere within the shelf life of simple refrigeration without a controlled atmosphere. A hybrid version would be one including a simple gas flushing followed by a possible gas injection at the time of packing but without any ongoing control. A more sophisticated form would include some gas environment monitoring and adjustment (e.g. flushing/scrubbing).

German Patent Application No 42 18 026 describes and claims a mobile paletted module for the supply of paletted loads under a controlled atmosphere of, for example, nitrogen, oxygen, carbon dioxide or steam, mixed with other gases, at a predetermined temperature, characterised in that the supply (controlled atmosphere) module and the paletted loads have the same or similar dimensions, preferably the dimensions of the standard palettes which are used for the transport of goods in storage areas of ships, railway wagons and heavy goods vehicles, whereby the supply (controlled atmosphere) module forms one component and the paletted load the other component of a system, in which one or more paletted loads are connected across hoses and cables with the supply (controlled atmosphere) module as the first component, whereby the hose-cable package of any paletted load can be coupled or decoupled at any time independently of the other components.

French Patent Application No 26 94 744 describes and claims a device for the storage, transport handling, environmental protection under controlled temperature conditions, which device functions in autonomous manner, using either electrical or thermal energy, characterised in that it comprises a base forming a manual storage palette; an insulated container with two insulating doors provided with sealed hinges, locking means, a frame in profiled steel surrounding the container and an independent cooling and heating unit.

### DISCLOSURE OF INVENTION

In a first aspect, the present invention provides a forklift carryable pallet comprising a housing having a refrigeration system therein, the refrigeration system including an evaporator region and a condenser region, a first gas intake and a first gas outlet to and from the evaporator region, the first gas intake and the first gas outlet forming a first intake/outlet system, a second gas intake and a second gas outlet to and from the condenser region, the second gas intake and the second gas outlet forming a second intake/outlet system, there being a gas barrier between the two intake/outlet systems to substantially prevent the movement of gas from one to the other and characterised in that the refrigeration system is built into the pallet.

Preferably said gas intake/outlet to and from said evaporator region of the refrigeration system is along one side of said pallet and said gas intake/outlet to and from said condenser region of said refrigeration system is along a substantially opposite side.

Preferably said forklift has at least two for channels and said gas inlet/outlet to and from said evaporator region is through or along one said channel and gas inlet/outlet to and from the condenser region is through or along the other said channel.

In another aspect, the present invention provides a method of transporting and/or storing produce or other cargo comprising the steps of:
providing a forklift carryable pallet comprising a housing having a refrigeration system therein, the refrigeration system including an evaporator region and acondenser region, a first gas intake and
a first gas outlet to and from the evaporator region forming a first intake/outlet system, a second gas intake and a second gas outlet to and from the condenserregion, the second gas intake and the second gas outlet forming a second intake/outlet system, there being a gas barrier between the two intake/outlet systems to substantially prevent the movement of gas from one to the other and
characterised in that the refrigeration system is built into the pallet; directly or indirectly loading onto the pallet member the produce or cargo to be carried;
at least partially encompassing the produce or cargo, before and/or after said loading, with a barrier material; and
operating said refrigeration system to cool the produce or cargo, wherein the gas barrier provides measure of separation between the gas associated with the produce being cooled by the evaporator of the refrigeration system and the ambient gaseous environment being heated by the compressor of the refrigeration system.

Preferably said barrier is of corrugated cardboard and/or plastics film.

### BRIEF DESCRIPTION OF INVENTION

Figure 1 shows a side view of a packed form of the invention with the refrigeration unit combined with the pallet, having a cardboard surround of packaged or loose produce (preferably meat) which is stacked on the unit and pallet;
Figure 2 shows units of Figure 1 stacked on top of each other;
Figure 3 is a perspective view of the integral pallet based refrigeration unit of Figure 1;
Figure 4 is a sectional side elevation of the invention as shown in Figure 1;
Figure 5 is a sectional end elevation of the invention as shown in Figure 1; and

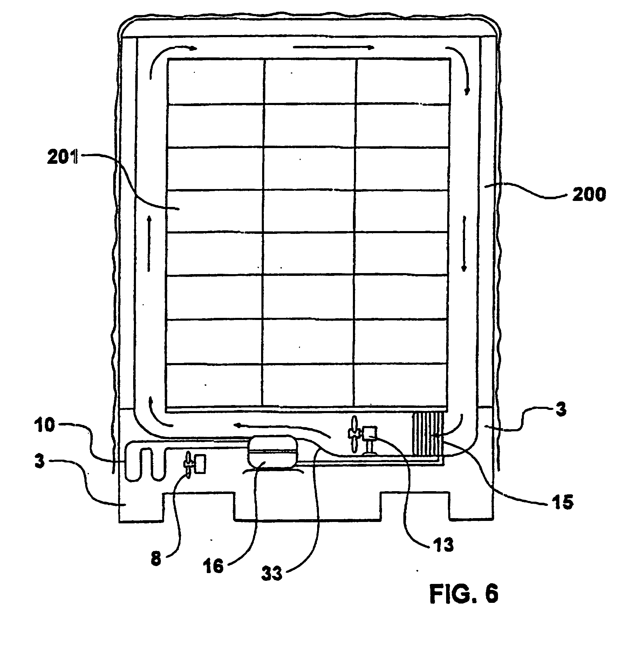

Figure 6 is a side cross sectional view of the most preferred form of the present invention, this form of the present invention uses internal (with respect to said plastics material) insulation panels 200. These panels are self supporting and are sized in a range so as to provide an air duct around the stacked produce or cargo contained therewithin, the outer surface of the insulating panels is covered and sealed with abarrier material 2, for example, a plastics bag, the barrier material is sealed against the pallet base 3. Also shown is the gas barrier 33 between the hot and cold sides of the refrigeration system.

### BEST MODES FOR CARRYING OUR INVENTION

In preferred forms of the present invention as described the unit is operated in a number of different ways but each has the use of a refrigeration unit 1 and a plastics bag or other sealing barrier or means 2 positioned directly or indirectly on a pallet 3. By "plastics" is included for example foils, plastics, paper and other material including combinations thereof eg metallised plastics film. Preferably the plastics bag is a PVC air impermeable film.

In other forms of the invention the plastics bag is constructed from barrier film. In yet other forms the film is of the type which absorbs, at least in part gases for example carbon dioxide, methane or ethylene.

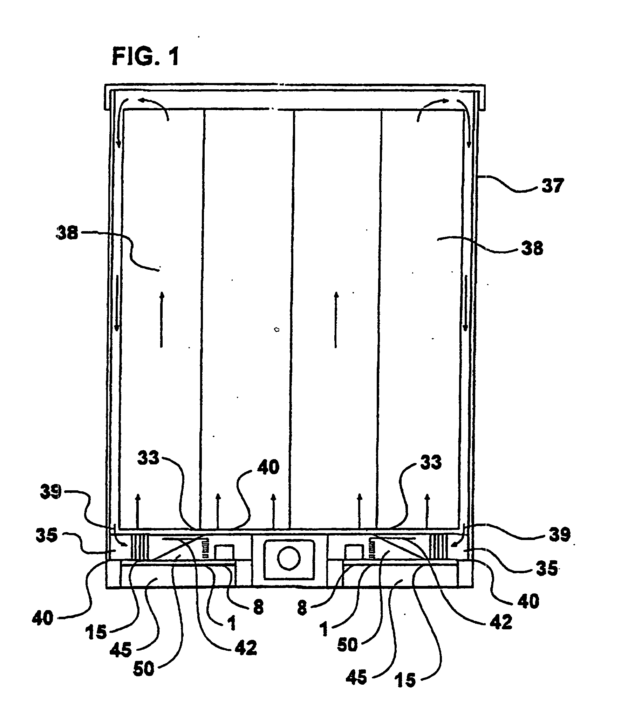

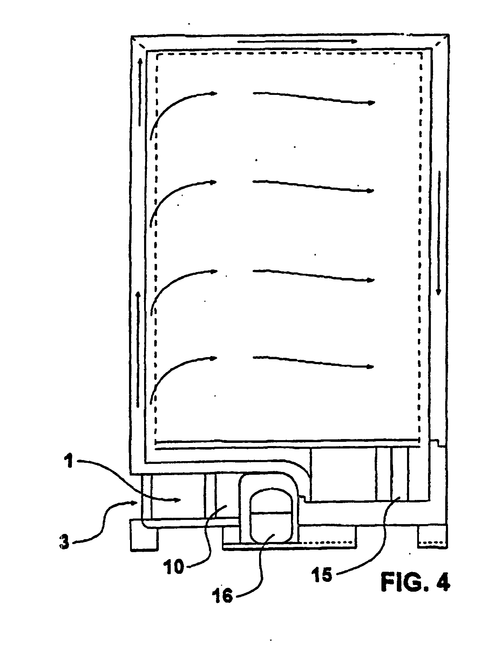

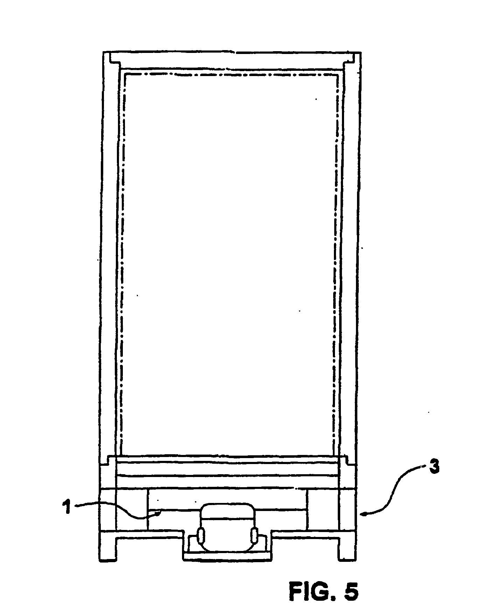

In the embodiment shown in Figures 1-5 the stack of cartons 6 is supported either directly or via a ribbed or raised floor by the refrigeration unit and pallet.

The refrigeration unit 1 as shown in Figure 1 includes exhaust fans 8, condenser intakes 9 and condensers 10.

Disposed on the other side of the unit within the housing 11 is the evaporator region (the evaporator is indicated by reference 15) of the refrigeration system with its own circulating fans 13 and air intake 14.

Persons skilled in the art will appreciate how a variety of different means can be provided about the inlet/outlet to the condenser side of the refrigeration unit allowing the sealing thereof thereto either within a channel or about a flange as, for example shown, in Figure I where an "0" ring 17 is shown.

As shown in Figure 1, the embodiment of the invention has a stack of cartons 6 either directly or indirectly via ribbing or an appropriate facerplaced on the combined refrigeration pallet unit. In the form shown in Figure 1 the stack of cartons is surrounded by a layer of cardboard 37 which maybe plastics lined. The use of the packaging guide 39 to line up the stack of cartons in a position and the use of the step for insulation 40 to correctly line up the produce encompassing insulation 37 produces a gap 38 between the said stack and said insulation which provides for the return flow of air. This return air duct and the ribbed floor 40, which creates an air gap underneath the stack, allows for the return flow of air through the evaporator to the evaporator fan 42.

In the embodiment shown in Figure 1, the refrigeration unit and pallet are combined into a slim line unit having a common, preferably ribbed, top surface. The unit has fork spaces 45 provided and air inlet, outlets on its top surface. This embodiment may include a plurality of condensers and evaporators to reduce overall height and has bottom air delivery and return air flow down two opposite sides of the pallet.

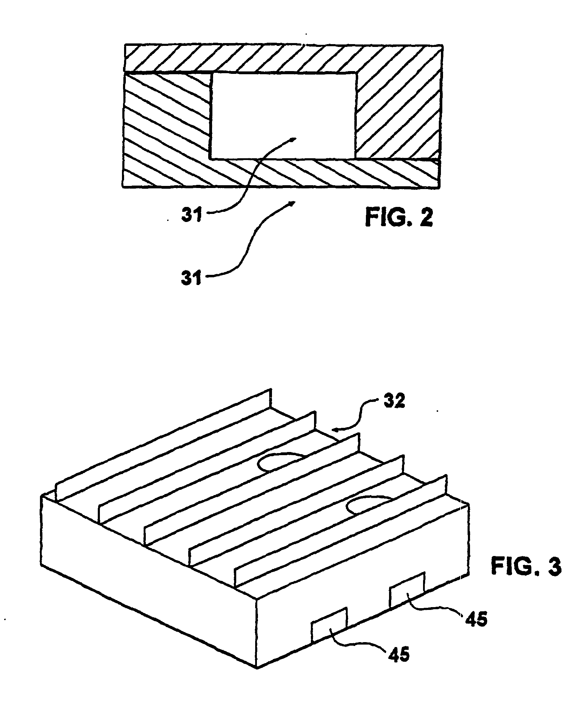

When not carrying produce the units occupy little space and Figure 2 shows one embodiment of the invention stacked one on top of the other.

The movement of air from the evaporator area of the unit to the condenser area of the unit is restricted by the provision of a gas proof and preferably insulated barrier.

The condenser is cooled by a separate flow ofairwhich flows in through the condenser cooling air inlet 9, is accelerated by the condenser fan 8 and heated by the condenser and passes outside via the condenser cooling fan outlet.

Persons skilled in the art will appreciate how a variety of different means can be provided about the inlet/outlet to the condenser side ofthe refrigeration unit allowing the sealing thereof thereto either within a channel or about a flange, for example.

The invention has a division labelled 33 which restricts the movement of air from the evaporator to the condenser.

Persons skilled in the art will appreciate the departure that the present invention offers from existing refrigerating transport systems. Persons will also see how the present system could with little adjustment allow gas flushing, or, even using a modification to the refrigeration unit, a measure of air evacuation from within the bag 2.

Another variation is the inclusion ofheating elements to either double as defrost elements in the evaporator or as heating for base of pallet. This enables the pallet to transport produce which is required to travel at a warm ambient temperature but be stored in a hold with frozen produce.

Yet another variation is the inclusion ofheating elements and a means for increasing the CO2 gas content of the air circulating through the produce. This enables fnnigation process to be undertaken, ie. increase temperature to approximately 40"C and increase CO2 content for half an hour.

The refrigeration unit is provided with either an external energisation source, which may consist of electrical energy provided by means of a power cable or otherwise, or an internal energisation source which may consist of a battery, power cell or alternatives. The invention provides a means of separating evaporation cooled air from the condenser warmed air.

Preferably the said evaporator cooled air is cycled over or through a stack ofproduce which is either directly or indirectly supported by the pallet. Preferably the means for separating and recycling the cooled air flow is insulated.

A preferred form of the present invention provides a system or apparatus whereby produce can be sealed within a controlled temperature and preferably atmosphere environment. The sealing barrier or means is preferably of a type to enable it to be unsealed to allow access to the cargo, for example, for customs inspections or unloading of part or all of the produce contained therein.

An advantage of the present invention is that several pallets can fit into a transportation vehicle or storage area which is often capable of controlling only one temperature. The major application of the invention is to use different palletised loads or containers, each containing the different type of cargo in the same transport vehicle or storage area with each palletised load or container being held at its optimum keeping temperature.

The refrigeration system is built into the pallet base. Obviously the system can be sized to fit any pallet sized dimensions, for example, iso, Euro pallet.

The cold side of the refrigeration system is separated from the hot side of the refrigeration system by means of a gas barrier.

The present invention uses a gas type barrier to seal and separate the refrigerated area from the hot air generated by the condenser. Thus the evaporator cold side of the refrigeration system is separated from the condenser hot side. It is possible to seal the barrier around the condenser. This is a lesser preferred technique owing to difficulties with resealing after opening.

The gas barrier also provides a possibility of flushing or vacuuming out the gas atmosphere contained within a container or palletised load and inj ecting a suitable atmosphere or mix of gases, for example, 99% CO2. In various non-respiring items ofproduce such as fish, this enables the shelf life of the produce to be increased. In forms ofthe invention it is not thought necessary to constantly monitor and control the atmosphere, the mix ofgases simply injected and the container or load resealed.

In other forms of the invention the bag material or gas barrier may consists of semi permeable material to allow for the exit or entrance of selected gases, for example, ethylene. In other applications the barrier material could be entirely non permeable.

Several methods exist to seal the bag, for example, the side of the bag can be located into a preferably moulded metal cavitywhich is affixed around the pallet base. A nylon strap could firmly lock the plastic bag into the cavity to provide a gas tight seal. The bag or barrier material could also be sealed by a water trap device which is permanently fitted into the pallet base.

Various applications may require the addition of insulating material. The thickness of the insulation can be varied depending on the application. The type of insulation material can also be varied according to the application.

It is believed insulation may be designed to enable containers or palletised loads, according to forms ofthe present invention, to control its cargo or produce temperature while operating in an external environment range of -18 C to +20"C. Should the invention be operated outside these temperature ranges additional insulation may be required. This may be added in the form of a flexible cover or another insulation wrap.

Alternatively thicker panels or containers can be used. Obviously less insulation is used when required.

Any insulation is designed to allow easy assembly and disassembly to enable the load to be inspected, for example, at Inter State and country boarders. This also enables the produce to be partially or fully unloaded at its destination.

The insulation panels themselves may include spacer elements which when butted against the sides of the cargo or produce form air plenums. The said spacer elements may be designed in a pattern to obtain the maximum aerodynamic advantage so that the air flow is sufficiently spread over the sides of the palletised cargo to allow for optimum temperature control.

Under normal handling there is likely to be load movement as well as deformation and possible damage of the outercasing. These occurrences could result in a fully or partially locked air flow pathway which could result in warming of some parts of the cargo or produce. In order to overcome this some components of a packing system, for example, with spacer elements maybe made from a strong material such as moulded plastic or foam plastic insulation.

In other forms of the invention extendable or telescopic spacer elements are designed to cover the length of one or more sides of the palletised cargo either before or after affixing the plastic bag or barrier material and/or insulation container to the cargo or produce. When installed or constructed the spacer elements form plenums which allow the air to circulate in a manner which provides the desired spread of air around the cargo.

Alternatively the said spacer elements may consist of some form of moulded plastic pattern which covers four sides on top of the palletised cargo. Said plastic patterns could be made from flexible and non-flexible materials and may fit over the cargo like a net and be shaped in the form ofa bag.

Obviously polypropylene insulation may be used instead of cardboard.
The refrigeration system will now be described. The cold side of the refrigeration system deals with air onto the refrigeration (evaporator) coil air offthe refrigeration (evaporator) coil. The system circulates air either around and/or through the produce. Air is moved by fans or convection means. The air pattern is determined by air plenums and ducts which may be incorporated into the refrigeration plant. Further ducts and plenums are provided by the configuration of the packaging system and/or built into the cargoes packaging. The fan may be variable speed to allow for optimum cooling.

The hot side of the refrigeration system deals with air onto the condenser 10 and air off the condenser. Ambient or cool air to the condenser is sucked (by mechanical means) through air ducts including those provided by forklift access channels in the purpose built pallet bases. Hot air offthe condenser 10 is vented so that it does not directly recycle back to the condenser 10.

When several palletised loads or containers, according to forms of the present invention, are stacked together in an unventilated or refrigerated space, there maybe no means for the hot air generated by the condenser to escape to the atmosphere. In a possible worse case hot air builds up with the space to a level where it is not possible for the units to continue to refrigerate their cargo.

Another potential problem exists when the palletised cargo or containers are butted up against each other and/or walls, for example, that of a truck and other cargo in a manner that restricts or blocks hot air coming off the condenser 10. This may have the effect of forcing the hot air to recycle directly onto the condenser 10 again or part of the hot air may recycle and another part rises communicating directly with the outer sides of other palletised cargoes according to a form of the present invention. This may have the effect of warming the sides of said palletised cargo and making it difficult or impossible for the system to refrigerate its cargo.

There are various ways of solving this problem.

The air channels or ducts are incorporated into the pallet base for the purpose of carrying the hot air to a point where it is able to be vented without being directly recycled and reused by the refrigeration system. Said air channels could be configured into a pattern. The pattern in each pallet base could be the same so that the channels of adjacent units interconnect when they are butted together. Said channels could carry hot air from the pallet bases to an outside position when it could then be vented.

Another means to overcome this problem is to provide spacer elements around one or more sides of each unit or palletised cargo so that when sides abut against each other there is a space provided which allows hot air from the condenser of each pallet unit to be vented up one or more sides of the container. This is a less attractive option as it does not maximise the cargo to transport or storage base ratio. Also hot air which does not intermix with sufficient ambient here will lead to warming of the sides of the container and may have an adverse effect on the cargo therewithin.

Two forklift channels are incorporated into the pallet base. One forklift channel becomes the duct to supply air onto the condenser whereas the other is used to vent hot air offthe condenser. This technique would require adj acent palletised loads or containers to be abutted so that the correct forklift channel communicated with each other. The supply air would enter from the last palletised load in a row connected to the air channel, possibly facing a wall. The hot air would vent from the last palletised load in a row connected to the vent at the opposite end to which the supply air enters.

Another method is to provide some form of air duct to channel the hot air from the condenser 10 to a position above the top of the palletised load or container.

Yet another method to overcome this problem is to physically separate the hot and cold side ofthe refrigeration system by locating the cold side at the base of the palletised load or container and the hot side at the top. In between could run the necessary cables and pipes. However, this embodiment does not fall within the scope of the claims.

In the situation where the transport vehicle or storage house is well ventilated sufficient cool air may flow under or through the pallet base so that hot air from the condenser dissipates quickly. Such a situation would enable the palletised loads to be butted up against each other on one or four sides and the hot condenser air to be directed into the ventilated ambient or cooled air flow running through or under the pallet base.

For example, in curtain-sided trucks the bottom edge of the curtain could be raised in order to provide sufficient ventilation to the units palletised load or container.

A defrost element is used to provide heating to the refrigeration system. The heating system is used when the unit is located on an external temperature below its required control temperature. For example, the palletised load or container could be set to hold fresh meat at a temperature -1°C, be located in environment of-18 °C instead of providing refrigeration the unit will need to provide heating for example, by using a resistance heater in orderto maintain the correct temperature.

The system may consist of periodic heating or consistent warming The air speed may of course and is preferred form is controlled by variable speed fan.

The refrigeration unit may be designed in a modular form so it can be easily removed from the pallet base for repair or maintenance.

As mentioned earlier the fan is preferably one of variable speeds, humidity is a factor, the temperature difference of the air coming in to and off the refrigeration coil.

This is effected by the speed of the fan, ie. high speed fan equals less temperature differential than is required for a low speed fan. Managing the temperature differential using the fan speed can therefore raise or lower humidity levels.

Obviously electronic components within the refrigeration unit need to be protected from water and dust.

Various forms of power supply are envisaged, for example, mains power supply, a portable . generator, battery power, solar power or any combination thereof. Although the refrigeration system described as beingprimarily electrical it could possiblybe powered by any mechanical means, ie. hydraulic.

There is an advantage in incorporating rechargeable batteries within the unit as this enables short haul or storage periods of say one to five days during which the unit need not be connected to electric power. This also enables the units orpalletised loads or containers to be transported on vehicles or stored in areas not equipped with electric power.

The refrigeration system is preferably monitored and alarmed for over temperature conditions.

A time delay switch could be fitted to the fan should the refrigeration system fail.

Such failure could result in the loss of produce due to an over temperature condition.

In preferred forms of the invention a backup appropriate temperature sensor is linked to an isolation switch which automatically shuts down the system. It is also possible to include an audible or other alarm which may, for example, be connected to a remote sensing system.

If the external environment of the palletised load or containers holds frozen products, power to the refrigeration unit may be cut off to allow the chilled cargo or produce, ie. meat to slowly freeze.

There are a variety of options for different air flow patterns, for example:
1. Circulating air around all four sides and the top of the palletised load or container by means of plenums.
2. Circulating air horizontally through the cargo/cargo packaging by means of at least two air plenums located on opposite sides to each other and air ducts built into the cargo packaging in between the plenums. One plenum being slightly pressurised.
3. Circulating air vertically through the cargo/cargo packaging by means of at least two air plenums (one located at the top of the pallet stack, the other located at the bottom of the pallet stack) and through air ducts created by the cargo packaging in between said air plenums. At the bottom the airretums up the outer sides of the palletised stack of cargo in a air space between the cargo and the pallet container.
4. Circulating air vertically through at least one air plenum located towards the centre of the palletised cargo, forcing the air more or less horizontally through the air ducts in the cargo packaging running at 90 degrees to the vertical air plenum, flowing outwardly to the sides of the pallet stack and into an air plenum in between the outsider sides of the palletised cargo and insulation container, then returning into an air plenum at the top of the palletized stack and onto the refrigeration coil thus completing the cycle. Ifthe unit is mounted at the base of the palletised cargo then this air flow pattern would be reversed. Utilising the chimney packaging concept developed in Australia.
5. Cycling air up one half of the palletised cargo and returning it down the other half of the palletised cargo. The two air streams separated by a gas barrier provide by the cargo packaging or affixed by plastic material or other means. And if so two fans one at top and one at the bottom could be used to move the air.

Basic principle is that the air flow enters at least one duct between one edge of the palletised load carry plate ("plate") and side ofbase unit, onto the refrigeration coil positioned underneath theplate, off the refrigeration coil and is direct to at least another edge of plate, air flows between this side and the side of the base unit up into a plenum created by the configuration of the palletised load and packaging components. The air may circulate around the four sides and top ofthe palletised load returning the inlet entry duct to complete the cycle ormay travel through the cargo to that point.

Either around/or through the cargo produce or cycles offthe refrigeration coil, down through ducts created by the cargo packaging into an air plenum which directs air to the outer an side or sides of the base of the container, up said side or sides, into a top plenum, then enters through ducts communicating with the plenum and onto the refrigeration coil.

Various methods exist to load the produce or cargo onto the pallets or into the containers. One example is the use of an additional pallet which is first loaded, sealed if required and then lifted and transported onto the pallet accordingly to the present invention.

## Claims

1. A forklift carryable pallet (3) comprising a housing (11) having a refrigeration system (1) therein, the refrigeration system (1) including an evaporator region (15) and a condenser region (10), a first gas intake (14) and a first gas outlet (13) to and from the evaporator region(15), the first gas intake (14) and the first gas outlet (13) forming a first intake/outlet system, a second gas intake (9) and a second gas outlet (8) to and from the condenser region (10), the second gas intake (9) and the second gas outlet (8) forming a second intake/outlet system, there being a gas barrier (33) between the two intake/outlet systems to substantially prevent the movement of gas from one to the other and **characterised in that** the refrigeration system (1) is built into the pallet (3).

2. A forklift carryable pallet as claimed in claim 1, wherein the first gas intake/outlet (14,13) is along one side of the pallet (3) and the second gas intake/outlet (9,8) is along a substantially opposite side.

3. A forklift carryable pallet as claimed in claim 1 or claim 2, wherein said forklift carryable pallet (3) has at least two channels and said first gas intake/outlet (14,13) is through or along one said channel and said second gas intake/outlet (9,8) is through or along the other said channel.

4. A forklift carryable pallet as claimed in any one of claims 1 to 3, **characterised in that** means (17) is provided whereby the mouth of a plastics, paper and/or foil bag (2) can be sealed to the housing about second gas intake/outlet (9,8) and further **characterised in that** there is provision for an external energisation and/or internal energisation of the refrigeration system (1).

5. A forklift carryable pallet as claimed in claim 4, wherein said first gas intake (14) and first gas outlet (13) is within a boss or flanged region of the housing (11) about which the mouth of the bag (2) can be held.

6. A forklift carryable pallet as claimed in claim 5, wherein the mouth of the bag (2) can be held by O-rings, tape or clamps.

7. A forklift carryable pallet as claimed in any of claims 4 to 6, wherein said housing (11) includes an encircling channel (17) or other means into which a region ofthe bag (2) can be wedged or otherwise held.

8. A transportable unit **characterised by** a forklift carryable pallet as claimed in any one of claims 1 to 7, and cargo or produce loaded directly or indirectly on to said forklift carryable pallet (3).

9. A method of storing produce or other cargo comprising the steps of:
providing a forklift carryable pallet (3) according to any of claims 1 to 7;
directly or indirectly loading onto the pallet member (3) the produce or cargo to be carried;
at least partially encompassing the produce or cargo, before and/or after said loading, with a barrier material (2); and
operating said refrigeration system (1) to cool the produce or cargo, wherein the gas barrier (33) provides measure of separation between the gas associated with the produce being cooled by the evaporator (15) of the refrigeration system (1) and the ambient gaseous environment being heated by the compressor (10) ofthe refrigeration system (1).

10. A method of storing produce or cargo as claimed in claim 9, wherein said gas barrier (33) is made from corrugated cardboard and/or a plastics film.

## Patentansprüche

1. Mit einem Gabelstapler transportierbare Palette (3), die ein Gehäuse (11) umfasst, in dem sich ein Kühlsystem (1) befindet, wobei das Kühlsystem (1) folgendes aufweist: einen Verdampferbereich (15) und einen Kondenserbereich (10); einen ersten Gaseinlass (14) und einen ersten Gasauslass (13) zum und vom Verdampferbereich (15), wobei der erste Gaseinlass (14) und der erste Gasauslass (13) ein erstes Einlass-/Auslasssystem bilden; einen zweiten Gaseinlass (9) und einen zweiten Gasauslass (8) zum und vom Kondenserbereich (10), wobei der zweite Gaseinlass (9) und der zweite Gasauslass (8) ein zweites Einlass/Auslasssystem bilden; wobei sich zwischen den beiden Einlass-/Auslasssystemen eine Gassperre (33) befindet, um im Wesentlichen die Bewegung von Gas vom einen zum anderen zu verhindern; **dadurch gekennzeichnet, dass** das Kühlsystem in die Palette eingebaut ist.

2. Mit einem Gabelstapler transportierbare Palette nach Anspruch 1, wobei der erste Gaseinlass/-auslass (14,13) entlang einer Seite der Palette (3) angeordnet ist und der zweite Gaseinlass/-auslass (9,8) entlang einer im Wesentlichen gegenüberliegenden Seite angeordnet ist.

3. Mit einem Gabelstapler transportierbare Palette nach Anspruch 1 oder Anspruch 2, wobei die mit einem Gabelstapler transportierbare Palette (3) mindestens zwei Kanäle hat und der erste Gaseinlass/-auslass (14,13) durch oder entlang einem der Kanäle verläuft und der zweite Gaseinlass/-auslass (9,8) durch oder entlang dem anderen Kanal verläuft.

4. Mit einem Gabelstapler transportierbare Palette nach einem der Ansprüche 1 bis 3, **dadurch gekennzeichnet, dass** ein Mittel (17) bereitgestellt wird, mit dem die Öffnung eines Beutels (2) aus Kunststoff, Papier und/oder Folie um den zweiten Gaseinlass/-auslass (9,8) gegen das Gehäuse verschlossen werden kann; und weiter **dadurch gekennzeichnet, dass** Vorkehrungen für eine externe Energiezufuhr und/oder interne Energiezufuhr für das Kühlsystem (1) vorhanden sind.

5. Mit einem Gabelstapler transportierbare Palette nach Anspruch 4, wobei sich der erste Gaseinlass (14) und der erste Gasauslass (13) in einem vorstehenden oder mit einem Flansch versehenen Bereich des Gehäuses (11) befinden, um den die Öffnung des Beutels gehalten werden kann.

6. Mit einem Gabelstapler transportierbare Palette nach Anspruch 5, wobei die Öffnung des Beutels (2) durch O-Ringe, Band oder Klemmen gehalten werden kann.

7. Mit einem Gabelstapler transportierbare Palette einem der Anspräche 4 bis 6, wobei das Gehäuse (11) einen umlaufenden Kanal (17) oder sonstiges Mittel aufweist, in dem ein Bereich des Beutels (2) geklemmt oder anderweitig gehalten werden kann.

8. Transportierbare Einheit, **gekennzeichnet durch** eine mit einem Gabelstapler transportierbare Palette nach einem der Ansprüche 1 bis 7 und direkt oder indirekt auf die mit einem Gabelstapler tragbare Palette (3) geladene Fracht oder Produkte.

9. Verfahren zum Lagern von Produkten oder anderer Fracht, das folgende Schritte umfasst:
Bereitstellen einer mit einem Gabelstapler tragbaren Palette (3) nach einem der Ansprüche 1 bis 7;
direktes oder indirektes Laden der zu transportierenden Produkte oder Fracht auf das Palettenglied (3);
mindestens teilweises Umgeben der Produkte oder Fracht, vor und/oder nach dem Laden mit einem Sperrmaterial (2); und
Betreiben des Kühlsystems (1) zum Kühlen der Produkte oder Fracht, wobei die Gassperre (33) eine Maßnahme bereitstellt zum Trennen des mit der Kühlung der Produkte durch den Verdunster (15) des Kühlsystems (1) zusammenhängenden Gases und der gasförmigen Umgebung, die durch den Kompressor (10) des Kühlsystems (1) erwärmt wird.

10. Verfahren zum Lagern von Produkten oder Fracht nach Anspruch 9, wobei die Gassperre aus Wellkarton und/oder einer Kunststofffolie hergestellt ist.

## Revendications

1. Palette (3) transportable par chariot élévateur à fourche, comportant un carter (11) dans lequel est installé un système de réfrigération (1), ce système de réfrigération (1) comprenant une zone 'évaporateur' (15) et une zone 'condenseur' (10), une première admission de gaz (14) et une première sortie de gaz (13) en direction et en provenance de la zone évaporateur (15), la première admission de gaz (14) et la première sortie de gaz (13) constituant un premier système d'admission/de sortie, une deuxième admission de gaz (9) et une deuxième sortie de gaz (8) en direction et en provenance de la zone condenseur (10), la deuxième admission de gaz (9) et la deuxième sortie de gaz (8) constituant un deuxième système d'admission/de sortie, les deux systèmes d'admission/de sortie étant séparés par une barrière à gaz (33) servant à empêcher en grande partie le déplacement du gaz d'un système à l'autre, et **caractérisée en ce que** le système de réfrigération (1) est intégré dans la palette (3).

2. Palette transportable par chariot élévateur à fourche selon la revendication 1, **caractérisée en ce que** la première admission/sortie de gaz (14, 13) se trouve située le long d'un des côtés de la palette (3) et la deuxième admission/sortie de gaz (9, 8) se trouve située le long d'un côté essentiellement opposé.

3. Palette transportable par chariot élévateur à fourche selon la revendication 1 ou la revendication 2, **caractérisée en ce que** la palette (3) transportable par chariot élévateur à fourche comporte au moins deux cannelures et **en ce que** la première admission/sortie de gaz (14, 13) traverse ou est disposée le long d'une de ces cannelures, et la deuxième admission/sortie de gaz (9, 8) traverse ou est disposée le long de l'autre cannelure.

4. Palette transportable par chariot élévateur à fourche selon l'une quelconque des revendications 1 à 3, **caractérisée en ce que** l'unité est dotée de moyens (17) permettant de sceller l'ouverture d'un sac (2) en matière plastique, en papier et/ou en feulle métallique sur le carter autour de la deuxième admission/sortie de gaz (9, 8), et **caractérisée par** ailleurs en ce qu'il est prévu des moyens d'alimentation externe et/ou d'alimentation interne du système de réfrigération (1).

5. Palette transportable par chariot élévateur à fourche selon la revendication 4, **caractérisée en ce que** la première admission de gaz (14) et la première sortie de gaz (13) se trouvent à l'intérieur d'un bossage ou d'une zone à brides du carter (11), autour de laquelle l'ouverture du sac (2) peut être tenue.

6. Palette transportable par chariot élévateur à fourche selon la revendication 5, **caractérisée en ce que** l'ouverture du sac (2) peut être tenue par des joints toriques, du ruban ou des dispositifs de serrage

7. Palette transportable par chariot élévateur à fourche selon l'une quelconque des revendications 4 à 6, **caractérisée en ce que** le carter (11) comprend une cannelure (17) qui l'entoure ou tout autre moyen dans lequel une partie du sac (2) peut être calée ou autrement retenue.

8. Unité transportable **caractérisée par** une palette transportable par chariot élévateur à fourche selon l'une quelconque des revendications 1 à 7, et chargement ou produits chargés directement ou indirectement sur cette palette (3) transportable par chariot élévateur.

9. Méthode de magasinage des produits ou autre chargement comportant les étapes qui consistent:
à prévoir une palette transportable par chariot élévateur à fourche selon l'une quelconque des revendications 1 à 7;
à charger directement ou indirectement sur l'élément palette (3) les produits ou le chargement à transporter;
à entourer au moins en partie les produits ou le chargement, avant et/ou après les avoir chargés, d'un matériau barrière (2); et
à mettre en oeuvre le système de réfrigération (1) pour refroidir les produits ou le chargement, **caractérisée en ce que** la barrière à gaz (33) offre un certain degré de séparation entre le gaz associé aux produits en cours de refroidissement par l'évaporateur (15) du système de réfrigération (1) et l'environnement gazeux ambiant en cours de chauffage par le compresseur (10) du système de réfrigération (1).

10. Méthode de magasinage des produits ou du chargement selon la revendication 9, **caractérisée en ce que** la barrière à gaz (33) est fabriquée en carton ondulé et/ou d'une feuille en matière plastique.
